# EUROPEAN PATENT SPECIFICATION

(11) **EP 1 883 265 B1**
(45) Date of publication and mention of the grant of the patent: **11.11.2009**
(21) Application number: 07113204.7
(22) Date of filing: 26.07.2007
(51) Int. Cl.: H04W 36/00

(54) **Method for handing off applications for webOS-enabled user devices**
Verfahren zur Weiterleitung von Anwendungen für WebOS-gesteuerte Benutzergeräte
Procédé pour transférer des applications pour dispositifs utilisateur habilités pour WebOS

(30) Priority: 26.07.2006 US 820356 P; 15.11.2006 US 560056; 20.07.2007 KR 20070072775
(43) Date of publication of application: 30.01.2008
(73) Proprietor: Samsung Electronics Co., Ltd., Suwon-si, Gyeonggi-do (KR)
(72) Inventor: Appaji, Anuradha Kadba c/o Samsung Electronics Co., Ltd., Gyeonggi-do (KR)
(74) Representative: Grünecker, Kinkeldey, Stockmair & Schwanhäusser Anwaltssozietät

(56) References cited:
- EP-A- 1 603 286
- WO-A-03/079660
- WO-A-2005/076649
- GB-A- 2 364 802

## Description

A traditional personal computer might store applications and data in a memory location, such as a hard drive, within the computer itself. When a user wishes to launch an application, the user might retrieve the application from the local storage location and cause the application to execute on the processor of the personal computer. Under a concept known as WebOS, a personal computer might be able to make use of applications that are stored remotely on a server computer. Such a personal computer might have a network connection to the server and a browser or similar graphical user interface that allows a user to interact with the server. When a user launches an application through the browser, the application might execute on the server rather than on the user's computer.

Data entered by the user into the browser might be sent over the network connection to the server for processing by the remote application. When the application completes the processing of the data, the server might send the browser a bitmap depicting the appearance the browser should take on as a result of the processing of the data. That is, the browser is given the appearance it would have if the processing of the data had occurred on the user's computer rather than on the server. In this way, the user can be given the impression that the application is executing on the user's own computer.

In some cases, information is sent from the server to the browser in the form of a file known as a DOM file. As is well known in the art, the Document Object Model (DOM) is a specification developed by the World Wide Web Consortium that allows hypertext markup language (HTML) and extensible markup language (XML) documents to be treated as objects that can be modified by programming code or scripts. The DOM can be used to convert an XML document into a document that resembles a database record and such a record can be referred to as a DOM file. A server executing an application in a WebOS environment might place information needed to update a browser into a DOM file and send the DOM file to the browser. Further updates to the browser might be made by sending the browser only the portion of the DOM file that has changed since the last update of the browser.

The use of WebOS allows a personal computer with limited processing power and/or memory to behave in the manner of a more powerful computer. The low-end computer could appear to execute applications that it would otherwise be incapable of executing. The personal computer would not be tied to a particular operating system or set of locally installed proprietary applications but could instead use an open-source operating system and freely available browsers and web-based applications.

It should be understood that the term WebOS refers to one platform for accessing applications and data remotely over a network but that other platforms are available or might be used for performing similar functions. The terms "WebOS", "WebOS-based", and the like will be used hereinafter to refer to components and processes related to the execution of a remotely executed but locally manipulable application.

WO 03/079660 A1 refers to a method and system for re-direction and handoff for pre-paid mobile services in third generation networks. In a mobile IP system, one or more "non-mobile" network devices are provided and a mobile node. The non-mobile network devices and the mobile node are assigned a network address, such as IP addresses on a home sub-net, HS. The home sub-net includes a wireless network, a wired LAN, an optical network, or a cable network. The home sub-net is connected to an external network such as the internet or an intranet via a home agent, HA. The home agent is a gateway router for the home sub-net. When the mobile node roams away from its home sub-net, it periodically transmits mobile IP messages to foreign agents, such as foreign agent, FA, via external network. The foreign agent resides on a foreign sub-net with one or more foreign non-mobile network devices. The foreign agent is a gateway router for the foreign sub-net. The roaming mobile node listens for mobile IP messages from foreign agents. When the roaming mobile node receives an agent advertisement message from a foreign agent indicating that it is now on a foreign sub-net, the mobile node registers with the foreign agent and its home agent indicating that the mobile node has roamed away from its home subnet. The mobile node, the home agent, and the foreign agent maintain some mobile IP state information. The mobile node periodically transmits "keep alive" messages using ICNP messages, including standard ICNP messages, and other ICNP messages that are unique to mobile IP.

GB 2 364 802 A refers to an electronic document delivery and transformation and more particularly to document delivery systems, wherein service transform documents are delivered to client machines. The client machine is coupled to a transcoder proxy. The client machine may be, for example, a palm top or handheld computer or a wireless communication device with limited display, memory, and/or processing capability. The transcoder proxy is covered to receive electronic documents. Each electronic document includes one or more elements, and is expressed in a first digital format, e.g. a text based marked-up language such as HTML or XML. The transcoder proxy assigns a unique identifier to each element of the electronic document. The transcoder proxy produces an "original" script including at least a portion of the electronic document expressed in a second digital format, e.g. a scripting language. The original script includes the elements within the portion of the electronic document, as well as the identifiers assigned to the elements. The transcoder proxy provides the original script to the client machine. The transcoder proxy may form a model of a logical structure of the electronic document. The model may also define methods for accessing and manipulating the document. The model may be, for example, a document object model, DOM. The transcoder proxy includes a synchronous document object model, DOM, generator coupled to a transcoder and a user interface generator. The synchronous (DOM) generator is coupled to receive the electronic document, and include an identifier, ID, generator for assigning a unique identifier to each element of the electronic document. The transcoder receives a first portion of the electronic document, and translates the first portion of the electronic document from the first digital format, thereby producing the original script in a second digital format. The original script includes the elements within the first portion of the electronic document and the identifiers assigned to the elements. The transcoder provides the original script to the client machine coupled to the transcoder. The transcoder receives the second portion of the electronic document, and translates the second portion of the electronic document from the first digital format, thereby producing a modification script in the second digital format. The transcoder provides the modification script to the client machine.

It is the object of the present invention to provide an improved system for handing off an application in a mobile telecommunications environment and an improved method to promote continued execution of an application in a mobile telecommunications environment.

This object is solved by the subject matter of the independent claims.

Preferred embodiments are defined in the dependent claims.

In one embodiment, a system for handing off an application in a mobile telecommunications environment is provided. The system comprises a first telecommunications network serving a first location, a second telecommunications network serving a second location, and a handset. The first network comprises a first server operable to execute the application and an application state data operable to retain data related to a state of the application. The second network comprises a second server operable to receive the application state data and operable to execute the application using the application state data such that execution continues substantially uninterrupted. The handset is operable to communicate wirelessly with the first telecommunications network while in the first location and operable to communicate wirelessly with the second telecommunications network while in the second location. A movement of the handset from the first location to the second location promotes (performs) the transmission of the application state data from the first telecommunications network to the second telecommunications network.

In another embodiment, a method to promote continued execution of an application in a mobile telecommunications environment is provided. The method comprises enabling access to the application via a mobile device, executing the application on a first server of a telecommunications network serving a first geographical area, and storing data related to a status of the application in an application state data on the first server. When the mobile device moves from the first geographical area to a second geographical area, the application state data is transmitted from the first server to a second server serving the second geographical area. The application state data promotes (performs) continued execution of the application on the second server with a second status similar to a first status possessed by the application during execution on the first server.

In another embodiment, a system for handing off an application in a mobile telecommunications environment is provided. The system comprises a first telecommunications network serving a first location. The first network comprises a first server operable to execute the application and an application state data operable to retain data related to a state of the application. The first telecommunications network is operable to communicate with a second telecommunications network serving a second location. The second network comprises a second server operable to receive the application state data and operable to execute the application using the application state data such that execution continues in an uninterrupted fashion. A handset is operable to communicate wirelessly with the first telecommunications network while in the first location and operable to communicate wirelessly with the second telecommunications network while in the second location. A movement of the handset from the first location to the second location promotes the transmission of the application state data from the first telecommunications network to the second telecommunications network.

These and other features and advantages will be more clearly understood from the following detailed description taken in conjunction with the accompanying drawings and claims. For a more complete understanding of the disclosure and the advantages thereof, reference is now made to the following brief description, taken in connection with the accompanying drawings and detailed description, wherein like reference numerals represent like parts.
Figure 1 illustrates a system for handing off applications in a mobile WebOS environment according to an embodiment of the disclosure.
Figure 2 illustrates a method for ensuring uninterrupted execution of an application in a mobile WebOS environment according to an embodiment of the disclosure.
Figure 3 is a diagram of a wireless communications system including a handset operable for some of the various embodiments of the disclosure.
Figure 4 is a block diagram of a handset operable for some of the various embodiments of the disclosure.
Figure 5 is a diagram of a software environment that may be implemented on a handset operable for some of the various embodiments of the disclosure.

It should be understood at the outset that although an illustrative implementation of one embodiment of the disclosure is illustrated below, the system may be implemented using any number of techniques, whether currently known or in existence. The disclosure should in no way be limited to the illustrative implementations, drawings, and techniques illustrated below, including the exemplary design and implementation illustrated and described herein, but may be modified within the scope of the appended claims.

The WebOS concept might be extended for use on handheld mobile electronic devices that have the capability for a wireless connection to the Internet or other networks. That is, devices such as mobile telephones, personal digital assistants, handheld computers, and similar devices might use a locally installed browser to wirelessly interface with a network and gain access to applications and data that are stored on a remote server. Such devices will be referred to herein as handsets or as mobile devices. The use of WebOS can give a handset with limited resources access to applications that it would not be able to execute locally and can thus allow an inexpensive handset to have functionality that would otherwise be available only in more expensive handsets. Similarly, more expensive handsets can be given functionality that would otherwise require an infeasible amount of processing power and/or memory.

However, the use of WebOS on handsets might be limited by the fact that the applications and the application-related data used by a handset might reside on more than one remote server. As a handset moves from a first network to a second network (for instance, when the handset user drives from one location to another), a server in the second network might begin executing an application that had been executing on a server in the first network. If information about the current status of the application is not passed from the first server to the second server, the application may not execute properly on the second server.

For example, if a user were playing a game on a WebOS-based handset, the game would execute on a server and the server would update the display screen of the handset with the appropriate game-related images. Information about the state of the game, such as scores, current game status, and user-selected settings, might be stored on the server. If the user moved to a different network during the course of the game, this game state information would need to be passed to a server in the second network so that the game could continue without interruption. If this information is not transferred, the game might restart from the beginning or exhibit other undesirable behavior when the user moves from one network to another.

In an embodiment, information about the status of an application that is executing on a server on behalf of a WebOS-based handset is placed in an application state data file. When the user of the handset moves from one network to another, the application state data file is passed from a server in the first network to a server in the second network. The second server, on which the application can also execute, receives the application state data file and begins executing the application with the data in the application state data file. In this way, the application can resume execution without interruption and the user is not aware that execution moved from one server to another. In an embodiment, the application state data file is a DOM file and will be referred to hereinafter as a DOM file, but it should be understood that other types of files could be used to contain data about an application's status.

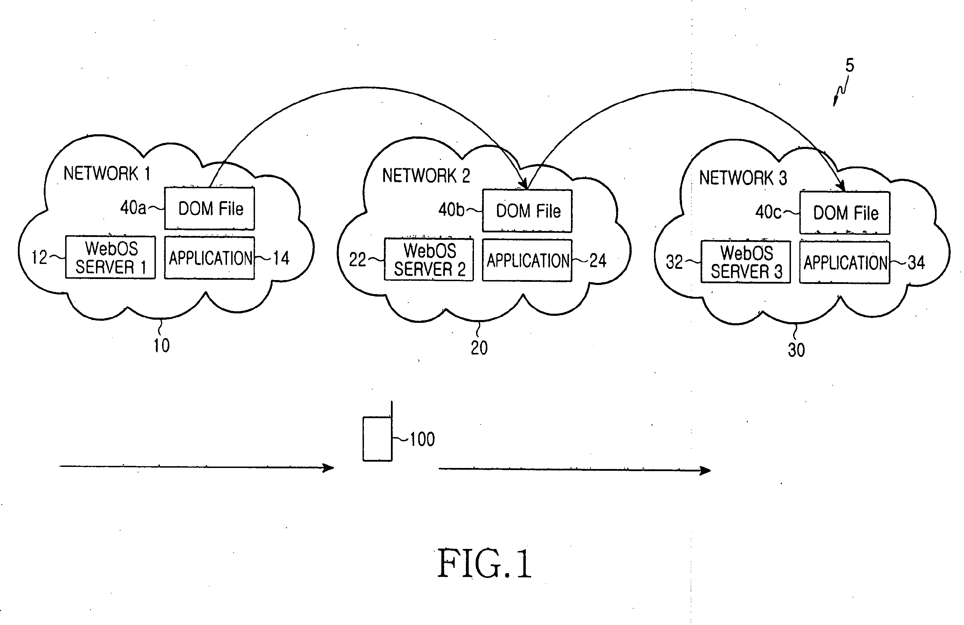

Figure 1 illustrates an embodiment of a system 5 for handing off a WebOS-based application from one server to another. The system 5 includes a plurality of overlapping telecommunications networks including a first network 10, a second network 20, and a third network 30. Wireless communication might occur within one of the networks 10, 20, or 30 via, for example, code division multiple access (CDMA) technology, global system for mobile communications (GSM) technology, or another well-known wireless telecommunications protocol. WebOS-related data might also be transmitted within and between the networks 10, 20, and 30, as described below.

A handset 100 can communicate wirelessly with other telecommunications devices while the handset 100 is in one of the networks 10, 20, or 30. Although the handset 100 is depicted outside the networks 10, 20, and 30, it should be understood that whenever the handset 100 is able to wirelessly communicate within one of the networks 10, 20, or 30, the handset can be considered to be located within that network 10, 20, or 30. As the handset 100 moves, for example, from the first network 10 to the second network 20 to the third network 30, telecommunications services for the handset 100 are passed from one network to another.

The network 10, 20, or 30 in which the handset 100 is currently located can be referred to as the source network and a network 10, 20, or 30 towards which the handset 100 is moving can be referred to as a target network. For example, if the handset 100 is currently in, but is about to leave, the first network 10 and is about to enter the second network 20, the first network 10 would be considered the source network and the second network 20 would be considered the target network.

In the embodiment of Figure 1, the first network 10 includes a first WebOS server 12, the second network 20 includes a second WebOS server 22, and the third network 30 includes a third WebOS server 32. While one WebOS server 12, 22, or 32 is shown in each network 10, 20, or 30, it should be understood that each network 10, 20, or 30 might contain more than one WebOS server or that one WebOS server might be shared by more than one of the networks 10, 20, and 30.

The first WebOS server 12 can execute one or more applications 14 on behalf of the handset 100. Similarly, the second WebOS server 22 can execute one or more applications 24 and the third WebOS server 32 can execute one or more applications 34. While the applications 14, 24, and 34 are depicted outside the first WebOS server 12, the second WebOS server 22, and the third WebOS server 32, it should be understood that the applications 14, 24, and 34 might actually reside within the first WebOS server 12, the second WebOS server 22, and the third WebOS server 32.

In an embodiment, at least one common application is present among the applications 14, the applications 24, and the applications 34. That is, there is at least one application that can be executed by the first WebOS server 12, the second WebOS server 22, and the third WebOS server 32. If this common application is executing on a server within one of the networks 10, 20, or 30, present embodiments allow uninterrupted execution of the common application to continue as the handset 100 moves to another network 10, 20, or 30.

In an embodiment, this uninterrupted execution of the common application is achieved by placing status data for the application in a DOM file 40. The DOM file 40 is then passed from the source network to the target network as the handset 100 moves from the source network to the target network. In other embodiments, status data for the application could be stored in another format and the data could be passed from the source network to the target network in this different format.

As an example, one of the common applications might be an email program. If a user of the handset 100 launches the email program while in the first network 10, the email program will appear to execute on the handset 100 but will actually execute on the first WebOS server 12. As execution of the email program progresses, the DOM file 40a might be updated with information related to the status of the email program.

If the handset 100 moves from the first network 10 to a target network, the second network 20 for example, execution of the email program might pass from the first WebOS server 12 to the second WebOS server 22. At approximately the same time, the DOM file 40a might be transferred from the first network 10 to the second network 20 and become DOM file 40b. The second WebOS server 22 could then use the application status data contained in the DOM file 40b to resume execution of the email program at the point where execution on the first WebOS server 12 ceased. The user of the handset 100 would not notice any disruption in service.

It is well known in the art that wireless telecommunications systems, such as the system 5, typically include triggers to promote the handoff of voice communication from one network to another. That is, as a handset, such as the handset 100, moves out of its source network, the source network might emit a signal that indicates which of a plurality of potential target networks will become the actual target network. The trigger signal might also specify when the handoff of voice data from source network to target network should occur and might include other information. After the handoff takes place, the network that had been the target network becomes the new source network. In this way, voice communication is transferred without interruption as a handset moves from one network to another.

In an embodiment, the transfer of the DOM file 40 from the source network to the target network is coordinated by this trigger signal. That is, the mechanisms in the source network that determine which network should be the target network for voice data and when the handoff of voice data from the source network to the target network should occur can perform a similar function for the DOM file 40. For example, when the handset 100 moves from the first network 10 to the second network 20, a trigger signal is generated to indicate that the second network 20 is the target network. This trigger signal can be used to specify that the DOM file 40 should be passed from the first network 10 to the second network 20. The trigger signal can also specify the time at which the handoff of the DOM file 40 should occur. This ensures that the DOM file 40 is passed to the appropriate network 10, 20, or 30 at the appropriate time. In other embodiments, the transfer of the DOM file 40 from the source network to the target network could be coordinated in other ways.

It should be understood that the DOM file 40 may retain the same name and the same data fields while being passed from network to network and thus it might be said that the same DOM file 40 is being passed. On the other hand, each instance of the DOM file (i.e., DOM file 40a in the first network 10, DOM file 40b in the second network 20, and DOM file 40c in the third network 30) might have different data in at least some of the data fields and DOM file 40a, DOM file 40b, and DOM file 40c could thus be considered different files. One of skill in the art will also recognize that the DOM file 40 can contain application status information for a single application or for multiple applications.

When no programs that would traditionally be considered one of the applications 14, 24, or 34 are executing on the handset 100, a default graphical user interface might still be present on the handset's display screen. This interface might be customized by the user to include favorite icons, bookmarks, screen savers, and other customizable features. It would typically be desirable that this custom interface remain consistent as the handset 100 moves between the networks 10, 20, and 30.

In an embodiment, the default user interface that appears on the display screen of the handset 100 can be considered one of the applications 14, 24, or 34. That is, information about the default appearance of the display screen can be included in the DOM file 40. Even when no other applications 14, 24, or 34, such as email programs, games, or other well-known programs, are executing on the handset 100, the DOM file 40 is still passed between the networks 10, 20, and 30 as the handset 100 moves between the networks 10, 20, and 30. In this way, the default screen appearance is passed from one network 10, 20, or 30 to the next and the user is presented with a consistent graphical user interface while moving across a broad geographical area.

It should also be understood that the applications 14, 24, and 34 are not necessarily executable programs but may be non-executable data that is to be retained as the handset 100 moves between the networks 10, 20, and 30. For example, a handset user might have an address book or similar contact list that is accessible through the handset 100. In a WebOS environment, the address book might be stored on one of the WebOS servers 12, 22, or 32 or as one of the applications 14, 24, or 34 rather than being stored locally on the handset 100. It would typically be desirable that the address book be available to the user regardless of the user's location. In an embodiment, data such as this that is not directly related to the status of an executable program can be included in the DOM file 40 and can thus be passed from one network 10, 20, or 30 to another as the user changes locations. The non-program-related data could then be retrieved via the handset 100 regardless of which network 10, 20, or 30 the handset 100 was in communication with.

Various optimizations can be applied to the application handoff system 5 to make the handoff of the applications 14, 24, or 34 more efficient. In one embodiment, the trigger signal that indicates that the handset 100 is moving from one of the networks 10, 20, or 30 to another can be used to increase efficiency. The trigger signal might specify several different target networks that the handset 100 might be moving toward. The DOM file 40 might be sent to each of these potential target networks prior to the handoff of one of the applications 14, 24, or 34. Then, when the handoff to the actual target network does occur, the DOM file 40 will already be in place on the target network. This can be more efficient than transmitting the DOM file 40 at or near the time when the application handoff occurs.

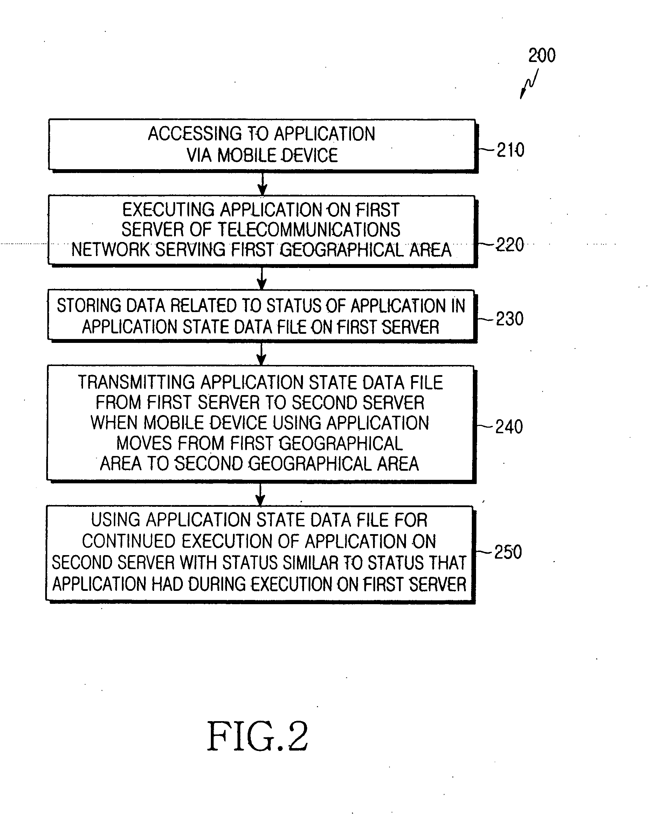

Figure 2 illustrates a method 200 for ensuring the uninterrupted execution of an application in a mobile WebOS environment. In box 210, access to an application via a mobile device is enabled. In box 220, the application executes on a first server of a telecommunications network serving a first geographical area. In box 230, data related to the status of the application is stored in an application state data file on the first server. In box 240, when the mobile device that is using the application moves from the first geographical area to a second geographical area, the application state data file is transmitted from the first server to a second server. In box 250, the application state data file promotes the continued execution of the application on the second server with a status similar to the status that the application had during execution on the first server.

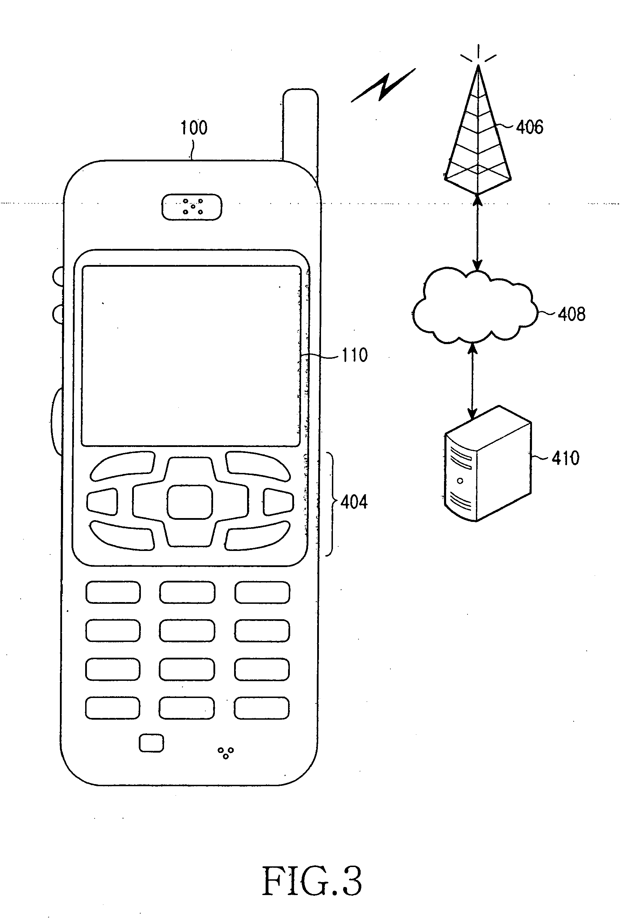

Figure 3 shows a wireless communications system including the handset 100. The handset 100 is operable for implementing aspects of the disclosure, but the disclosure should not be limited to these implementations. Though illustrated as a mobile phone, the handset 100 may take various forms including a wireless handset, a pager, a personal digital assistant (PDA), a portable computer, a tablet computer, or a laptop computer. Many suitable handsets combine some or all of these functions. In some embodiments of the disclosure, the handset 100 is not a general purpose computing device like a portable, laptop or tablet computer, but rather is a special-purpose communications device such as a mobile phone, wireless handset, pager, or PDA.

The handset 100 includes a display 110 and a touch-sensitive surface or keys 404 for input by a user. The handset 100 may present options for the user to select, controls for the user to actuate, and/or cursors or other indicators for the user to direct. The handset 100 may further accept data entry from the user, including numbers to dial or various parameter values for configuring the operation of the handset 100. The handset 100 may further execute one or more software or firmware applications in response to user commands. These applications may configure the handset 100 to perform various customized functions in response to user interaction.

Among the various applications executable by the handset 100 are a web browser, which enables the display 110 to show a web page. The web page is obtained via wireless communications with a cell tower 406, a wireless network access node, or any other wireless communication network or system. The cell tower 406 (or wireless network access node) is coupled to a wired network 408, such as the Internet. Via the wireless link and the wired network, the handset 100 has access to information on various servers, such as a server 410. The server 410 may provide content that may be shown on the display 110.

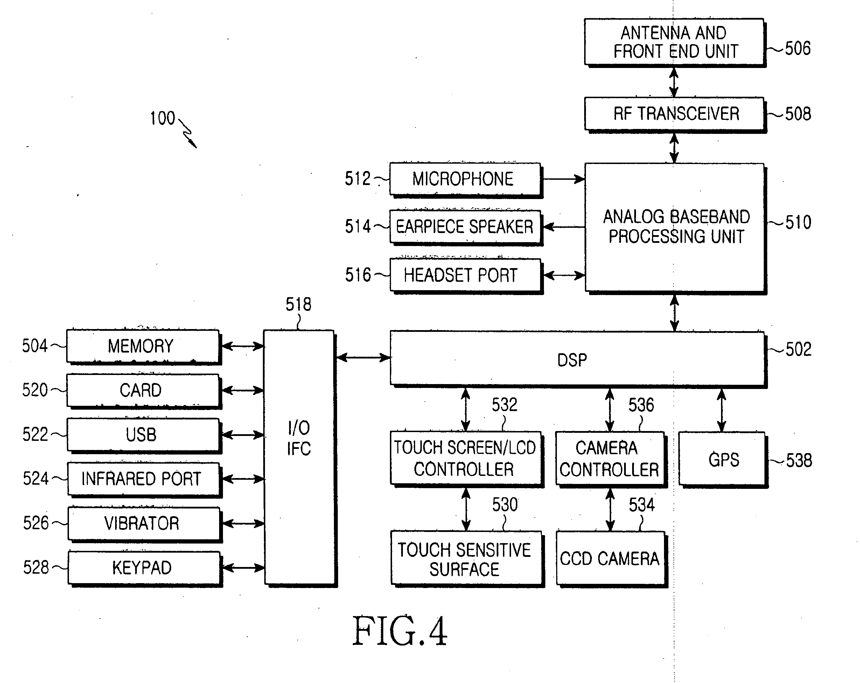

Figure 4 shows a block diagram of the handset 100. The handset 100 includes a digital signal processor (DSP) 502 and a memory 504. As shown, the handset 100 may further include an antenna and front end unit 506, a radio frequency (RF) transceiver 508, an analog baseband processing unit 510, a microphone 512, an earpiece speaker 514, a headset port 516, an input/output interface 518, a removable memory card 520, a universal serial bus (USB) port 522, an infrared port 524, a vibrator 526, a keypad 528, a touch screen liquid crystal display (LCD) with a touch sensitive surface 530, a touch screen/LCD controller 532, a charge-coupled device (CCD) camera 534, a camera controller 536, and a global positioning system (GPS) sensor 538.

The DSP 502 or some other form of controller or central processing unit operates to control the various components of the handset 100 in accordance with embedded software or firmware stored in memory 504. In addition to the embedded software or firmware, the DSP 502 may execute other applications stored in the memory 504 or made available via information carrier media such as portable data storage media like the removable memory card 520 or via wired or wireless network communications. The application software may comprise a compiled set of machine-readable instructions that configure the DSP 502 to provide the desired functionality, or the application software may be high-level software instructions to be processed by an interpreter or compiler to indirectly configure the DSP 502.

The antenna and front end unit 506 may be provided to convert between wireless signals and electrical signals, enabling the handset 100 to send and receive information from a cellular network or some other available wireless communications network. The RF transceiver 508 provides frequency shifting, converting received RF signals to baseband and converting baseband transmit signals to RF. The analog baseband processing unit 510 may provide channel equalization and signal demodulation to extract information from received signals, may modulate information to create transmit signals, and may provide analog filtering for audio signals. To that end, the analog baseband processing unit 510 may have ports for connecting to the built-in microphone 512 and the earpiece speaker 514 that enable the handset 100 to be used as a cell phone. The analog baseband processing unit 510 may further include a port for connecting to a headset or other hands-free microphone and speaker configuration.

The DSP 502 may send and receive digital communications with a wireless network via the analog baseband processing unit 510. In some embodiments, these digital communications may provide Internet connectivity, enabling a user to gain access to content on the Internet and to send and receive e-mail or text messages. The input/output interface 518 interconnects the DSP 502 and various memories and interfaces. The memory 504 and the removable memory card 520 may provide software and data to configure the operation of the DSP 502. Among the interfaces may be the USB interface 522 and the infrared port 524. The USB interface 522 may enable the handset 100 to function as a peripheral device to exchange information with a personal computer or other computer system. The infrared port 524 and other optional ports such as a Bluetooth interface or an IEEE 802.11 compliant wireless interface may enable the handset 100 to communicate wirelessly with other nearby handsets and/or wireless base stations.

The input/output interface 518 may further connect the DSP 502 to the vibrator 526 that, when triggered, causes the handset 100 to vibrate. The vibrator 526 may serve as a mechanism for silently alerting the user to any of various events such as an incoming call, a new text message, and an appointment reminder.

The keypad 528 couples to the DSP 502 via the interface 518 to provide one mechanism for the user to make selections, enter information, and otherwise provide input to the handset 100. Another input mechanism may be the touch screen LCD 530, which may also display text and/or graphics to the user. The touch screen LCD controller 532 couples the DSP 502 to the touch screen LCD 530.

The CCD camera 534 enables the handset 100 to take digital pictures. The DSP 502 communicates with the CCD camera 534 via the camera controller 536. The GPS sensor 538 is coupled to the DSP 502 to decode global positioning system signals, thereby enabling the handset 100 to determine its position. Various other peripherals may also be included to provide additional functions, e.g., radio and television reception.

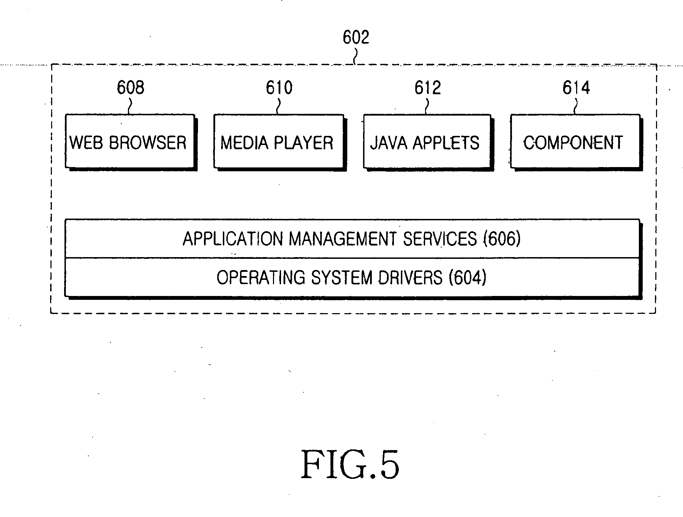

Figure 5 illustrates a software environment 602 that may be implemented by the DSP 502. The DSP 502 executes operating system drivers 604 that provide a platform from which the rest of the software operates. The operating system drivers 604 provide drivers for the handset hardware with standardized interfaces that are accessible to application software. The operating system drivers 604 include application management services ("AMS") 606 that transfer control between applications running on the handset 100. Also shown in Figure 5 are a web browser application 608, a media player application 610, and Java applets 612. The web browser application 608 configures the handset 100 to operate as a web browser, allowing a user to enter information into forms and select links to retrieve and view web pages. The media player application 610 configures the handset 100 to retrieve and play audio or audiovisual media. The Java applets 612 configure the handset 100 to provide games, utilities, and other functionality. A component 614 might provide all or part of the handoff functionality as described herein.

While several embodiments have been provided in the disclosure, it should be understood that the disclosed systems and methods may be embodied in many other specific forms without departing from the scope of the disclosure. The examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the disclosure. Other items shown or discussed as directly coupled or communicating with each other may be coupled through some interface or device, such that the items may no longer be considered directly coupled to each other but may still be indirectly coupled and in communication, whether electrically, mechanically, or otherwise with one another. Other examples of changes, substitutions, and alterations are ascertainable by one skilled in the art and could be made without departing from the scope disclosed herein.

## Claims

1. A system for handing off an application in a mobile telecommunications environment, comprising:
a first telecommunications network (10) serving a first location, the first network comprising:
a first server (12) operable to execute the application (14, 24, 34), and an application state data (40a) operable to retain data related to a state of the application;
a second telecommunications network (20) serving a second location, the second network comprising:
a second server (22) operable to receive the application state data and operable to execute the application (14, 24, 34) using the application state data such that execution continues uninterrupted; and
a handset (100) operable to communicate wirelessly with the first telecommunications network (10) while in the first location and operable to communicate wirelessly with the second telecommunications network (20) while in the second location and wherein a movement of the handset (100) from the first location to the second location performs the transmission of the application state data from the first telecommunications network (10) to the second telecommunications network (20),
wherein the application is a remotely executed but locally manipulated WebOS-based application, accessed via the handset (100).

2. The system of clam 1, wherein the application is remotely executed on at least one of the first and second servers (12, 22) and the application is locally manipulable on the handset (100).

3. The system of claim 1 or 2, wherein the application state data are arranged in a document object model, DOM, format.

4. The system of one of claims 1 to 3, wherein the transmission of the application state data from the first telecommunications network (10) to the second telecommunications network (20) is promoted by a trigger signal that indicates that the handset (100) is moving from the first location to the second location.

5. The system of one of claims 1 to 4, wherein, when the handset (100) moves from the first location to the second location, a graphical user interface information for the handset (100) is transmitted from the first telecommunications network (10) to the second telecommunications network (20) without regard to the status of the application.

6. The system of one of claims 1 to 5, wherein, when the handset (100) moves from the first location to the second location and an email program is in progress at the handset (100), information related to a status of the email program is transmitted from the first telecommunications network (10) to the second telecommunications network (20) for updating the application state data.

7. The system of one of claims 1 to 6, wherein the application state data is transmitted to a plurality of servers before a determination is made regarding which of the plurality of servers will become the second server (22).

8. The system of one of claims 1 to 7, wherein the first telecommunications network (10) is operable to communicate with the second telecommunications network (20) serving a second location.

9. A method to perform continued execution of an application in a mobile telecommunications environment, comprising:
enabling (210) access to the application via a mobile device (100);
executing (220) the application on a first server (12) of a telecommunications network serving a first geographical area;
storing (230) data related to a status of the application in an application state data on the first server (12); and
when the mobile device (100) moves from the first geographical area to a second geographical area, transmitting (240) the application state data from the first server (12) to a second server (22) serving the second geographical area, the application state data performing continued execution of the application on the second server (22) with a second status similar to a first status possessed by the application during execution on the first server (12),
wherein the application is a remotely executed but locally manipulated WebOS-based application.

10. The method of claim 9, wherein the application is remotely executed on at least one of the first and second servers and the application is locally manipulable on the handset.

11. The method of claim 9 or 10, wherein the application state data are arranged in a document object model, DOM, format.

12. The method of one of claims 9 to 11, wherein transmitting the application state data from the first server (12) to the second server (22) is triggered by a trigger signal that indicates that the handset (100) is moving from the first geographical area to the second geographical area.

13. The method of one of claims 9 to 12, further comprising, when the handset moves from the first geographical area to the second geographical area, transmitting a graphical user interface for the handset (100) from the first server (12) to the second server (22) without regard to the status of the application.

14. The method of one of claims 9 to 13, further comprising, when the handset (100) moves from the first geographical area to the second geographical area, transmitting information related to a status of an email program currently in progress at the handset (100) from the first server (12) to the second server (22) for updating the application state data.

15. The method of one of claims 9 to 14, further comprising transmitting the application state data to a plurality of servers before determining which of the plurality of servers will become the second server.

## Patentansprüche

1. System zum Übergeben einer Anwendung in einer Mobil-Telekommunikationsumgebung, das umfasst:
ein erstes Telekommunikationsnetz (10), das einen ersten Standort versorgt, wobei das erste Netz umfasst:
einen ersten Server (12), der so betrieben werden kann, dass er die Anwendung (14, 24, 34) ausführt, und eine Anwendungsstatus-Dateneinheit (40a), die in Funktion Daten halten kann, die sich auf einen Status der Anwendung beziehen;
ein zweites Telekommunikationsnetz (20), das einen zweiten Standort versorgt, wobei das zweite Netz umfasst:
einen zweiten Server (22), der in Funktion die Anwendungsstatus-Daten empfangen kann und in Funktion die Anwendung (14, 24, 34) unter Verwendung der Anwendungsstatus-Daten so ausführen kann, dass die Ausführung ohne Unterbrechung fortgesetzt wird; und
ein Handgerät (100), das so betrieben werden kann, dass es drahtlos mit dem ersten Telekommunikationsnetz (10) kommuniziert, wenn es sich an dem ersten Standort befindet, und in Funktion drahtlos mit dem zweiten Telekommunikationsnetz kommunizieren kann, wenn es sich an dem zweiten Standort befindet, und wobei durch eine Bewegung des Handgeräts (100) von dem ersten Standort an den zweiten Standort die Übertragung der Anwendungsstatus-Dateneinheit von dem ersten Telekommunikationsnetz (10) zu dem zweiten Telekommunikationsnetz (20) durchgeführt wird,
wobei die Anwendung eine ferngesteuert ausgeführte, jedoch lokal betätigte WebOSbasierte Anwendung ist, auf die über das Handgerät (100) zugegriffen wird.

2. System nach Anspruch 1, wobei die Anwendung fernbedient wenigstens an dem ersten oder dem zweiten Server (12, 22) ausgeführt wird, und die Anwendung an dem Handgerät (100) manuell betätigt werden kann.

3. System nach Anspruch 1 oder 2, wobei die Anwendungsstatus-Daten in einem DOM-Format (document object model format) angeordnet sind.

4. System nach einem der Ansprüche 1 bis 3, wobei die Übertragung der Anwendungsstatus-Daten von dem ersten Telekommunikationsnetz (10) zu dem zweiten Telekommunikationsnetz (20) durch ein Auslösesignal eingeleitet wird, das anzeigt, dass sich das Handgerät (100) von dem ersten Standort an den zweiten Standort bewegt.

5. System nach einem der Ansprüche 1 bis 4, wobei, wenn sich das Handgerät (100) von dem ersten Standort an den zweiten Standort bewegt, eine grafische Benutzerschnittstellen-Information für das Handgerät (100) ohne Berücksichtigung des Status der Anwendung von dem ersten Telekommunikationsnetz (10) zu dem zweiten Telekommunikationsnetz (20) übertragen wird.

6. System nach einem der Ansprüche 1 bis 5, wobei, wenn sich das Handgerät (100) von dem ersten Standort an den zweiten Standort bewegt und ein E-Mail-Programm auf dem Handgerät (100) läuft, Informationen, die sich auf einen Status des E-Mail-Programms beziehen, von dem ersten Telekommunikationsnetz (10) zu dem zweiten Telekommunikationsnetz (20) übertragen werden, um die Anwendungsstatus-Daten zu aktualisieren.

7. System nach einem der Ansprüche 1 bis 6, wobei die Anwendungsstatus-Daten zu einer Vielzahl von Servern gesendet werden, bevor eine Feststellung dahingehend getroffen wird, welcher der Vielzahl von Servern der zweite Server (22) wird.

8. System nach einem der Ansprüche 1 bis 7, wobei das erste Telekommunikationsnetz (10) in Funktion mit dem zweiten Telekommunikationsnetz (20) kommunizieren kann, das einen zweiten Standort versorgt.

9. Verfahren zum Durchführen fortgesetzter Ausführung einer Anwendung in einer Mobil-Telekommunikationsumgebung, das umfasst:
Ermöglichen (210) des Zugriffs auf die Anwendung über eine Mobilvorrichtung (100);
Ausführen (220) der Anwendung auf einem ersten Server (12) eines Telekommunikationsnetzes, das ein erstes geografisches Gebiet versorgt;
Speichern (230) von Daten, die sich auf einen Status der Anwendung beziehen, in einer Anwendungsstatus-Dateneinheit an dem ersten Server (12); und
wenn sich die Mobilvorrichtung (100) von dem ersten geografischen Gebiet zu einem zweiten geografischen Gebiet bewegt, Übertragen (240) der Anwendungsstatus-Dateneinheit von dem ersten Server (12) zu einem zweiten Server, der das zweite geografische Gebiet versorgt, wobei die Anwendungsstatus-Dateneinheit eine fortgesetzte Ausführung der Anwendung an dem zweiten Server (22) mit einem zweiten Status durchführen, der einem ersten Status ähnelt, den die Anwendung während der Ausführung an dem ersten Server (12) aufweist,
wobei die Anwendung eine ferngesteuert ausgeführte, jedoch lokal betätige WebOSbasierte Anwendung ist.

10. Verfahren nach Anspruch 9, wobei die Anwendung ferngesteuert wenigstens an dem ersten oder dem zweiten Server ausgeführt wird und die Anwendung auf dem Handgerät lokal gesteuert werden kann.

11. Verfahren nach Anspruch 9 oder 10, wobei die Anwendungsstatus-Daten in einem DOM-Format (document object model format) angeordnet sind.

12. Verfahren nach einem der Ansprüche 9 bis 11, wobei Übertragen der Anwendungsstatus-Daten von dem ersten Server (1) zu dem zweiten Server (22) durch ein Auslösesignal ausgelöst wird, das anzeigt, dass sich das Handgerät (100) von dem ersten geografischen Gebiet zu dem zweiten geografischen Gebiet bewegt.

13. Verfahren nach einem der Ansprüche 9 bis 12, das des Weiteren, wenn sich das Handgerät von dem ersten geografischen Gebiet zu dem zweiten geografischen Gebiet bewegt, Übertragen einer grafischen Benutzerschnittstelle für das Handgerät (100) von dem ersten Server (12) zu dem zweiten Server (22) ohne Berücksichtigung des Status der Anwendung umfasst.

14. Verfahren nach einem der Ansprüche 9 bis 13, das des Weiteren, wenn sich das Handgerät (100) von dem ersten geografischen Gebiet zu dem zweiten geografischen Gebiet bewegt, Übertragen von Informationen, die sich auf einen Status eines E-Mail-Programms beziehen, das aktuell auf dem Handgerät (100) läuft, von dem ersten Server (12) zu dem zweiten Server (22) zum Aktualisieren der Anwendungsstatus-Daten umfasst.

15. Verfahren nach einem der Ansprüche 9 bis 14, das des Weiteren Übertragen der Anwendungsstatus-Daten zu einer Vielzahl von Servern umfasst, bevor festgestellt wird, welcher der Vielzahl von Servern der zweite Server wird.

## Revendications

1. Système de transfert d'une application dans un environnement de télécommunications mobiles comprenant :
un premier réseau de télécommunications (10) desservant un premier emplacement, le premier réseau comprenant :
un premier serveur (12) utilisable pour exécuter l'application (14, 24, 34), et des données (40a) d'état de l'application utilisables pour retenir des données se rapportant à un état de l'application,
un deuxième réseau de télécommunications (20) desservant un deuxième emplacement, le deuxième réseau comprenant :
un deuxième serveur (22) utilisable pour recevoir les données d'état de l'application et utilisable pour exécuter l'application (14, 24, 34) en utilisant des données d'état de l'application de telle sorte que l'exécution se poursuive sans interruption, et
un combiné (100) utilisable pour communiquer sans fil avec le premier réseau de télécommunications (10) alors qu'il se trouve dans le premier emplacement, et utilisable pour communiquer sans fil avec le deuxième réseau de télécommunications (20) lorsqu'il se trouve dans le deuxième emplacement, et dans lequel un mouvement du combiné (100) du premier emplacement vers le second emplacement exécute la transmission des données d'état de l'application depuis le premier réseau de télécommunications (10) vers le deuxième réseau de télécommunications (20),
dans lequel l'application est une application fondée sur le système d'exploitation WebOS, exécutée à distance mais manipulée localement, à laquelle on accède par l'intermédiaire du combiné (100).

2. Système selon la revendication 1, dans lequel l'application est exécutée à distance sur au moins l'un des premier et deuxième serveurs (12, 22) et où l'application peut être manipulée localement sur le combiné (100).

3. Système selon la revendication 1 ou 2, dans lequel les données d'état de l'application sont disposées dans un format de modèle d'objets de document, DOM.

4. Système selon l'une des revendications 1 à 3,
dans lequel la transmission des données d'état de l'application depuis le premier réseau de télécommunications (10) vers le deuxième réseau de télécommunications (20) est favorisée par un signal de synchronisation qui indique que le combiné (100) se déplace depuis le premier emplacement vers le deuxième emplacement.

5. Système selon l'une des revendications 1 à 4,
dans lequel des informations concernant une interface utilisateur graphique pour le combiné (100) sont transmises depuis le premier réseau de télécommunications (10) vers le deuxième réseau de télécommunications (20) indépendamment de l'état de l'application lorsque le combiné (100) se déplace depuis le premier emplacement vers le deuxième emplacement.

6. Système selon l'une des revendications 1 à 5, dans lequel des informations se rapportant à un état d'un programme de messagerie électronique sont transmises depuis le premier réseau de télécommunications (10) vers le deuxième réseau de télécommunications (20) lorsque le combiné (100) se déplace depuis le premier emplacement vers le second emplacement et que le programme de messagerie électronique est en cours au niveau du combiné (100), afin de mettre à jour les données d'état de l'application.

7. Système selon l'une des revendications 1 à 6, dans lequel les données d'état de l'application sont transmises vers une pluralité de serveurs avant qu'une détermination soit faite en ce qui concerne lequel de la pluralité de serveurs deviendra le deuxième serveur (22).

8. Système selon l'une des revendications 1 à 7, dans lequel le premier réseau de télécommunications (10) est utilisable pour communiquer avec le deuxième réseau de télécommunications (20) desservant un deuxième emplacement.

9. Procédé destiné à réaliser l'exécution sans arrêt d'une application dans un environnement de télécommunications mobiles, comprenant :
la validation (210) de l'accès à l'application par l'intermédiaire d'un dispositif mobile (100),
l'exécution (220) de l'application sur un premier serveur (12) d'un réseau de télécommunications desservant une première zone géographique,
la mémorisation (230) de données se rapportant à un état de l'application dans des données d'état de l'application sur le premier serveur (12), et
lorsque le dispositif mobile (100) se déplace de la première zone géographique vers une seconde zone géographique, la transmission (240) des données d'état de l'application depuis le premier serveur (12) vers un deuxième serveur (22) desservant la deuxième zone géographique, les données d'état de l'application exécutant une exécution sans arrêt de l'application sur le deuxième serveur (22) avec un deuxième état semblable à un premier état, détenu par l'application pendant l'exécution sur le premier serveur (12),
dans lequel l'application est une application fondée sur le système d'exploitation WebOS exécutée à distance mais manipulée localement.

10. Procédé selon la revendication 9, dans lequel l'application est exécutée à distance sur au moins l'un des premier et deuxième serveurs et l'application peut être manipulée localement sur le combiné.

11. Procédé selon la revendication 9 ou 10, dans lequel les données d'état de l'application sont disposées dans un format de modèle d'objets de document, DOM.

12. Procédé selon l'une des revendications 9 à 11, dans lequel la transmission des données d'état de l'application depuis le premier serveur (12) vers le deuxième serveur (22) est déclenchée par un signal de synchronisation qui indique que le combiné (100) se déplace depuis la première zone géographique vers la seconde zone géographique.

13. Procédé selon l'une des revendications 9 à 12, comprenant en outre la transmission d'une interface utilisateur graphique pour le combiné (100) depuis le premier serveur (12) vers le deuxième serveur (22) indépendamment de l'état de l'application, lorsque le combiné se déplace depuis la première zone géographique vers la seconde zone géographique.

14. Procédé selon l'une des revendications 9 à 13, comprenant en outre la transmission d'informations se rapportant à l'état d'un programme de messagerie électronique actuellement en cours au niveau du combiné (100) depuis le premier serveur (12) vers le deuxième serveur (22), lorsque le combiné (100) se déplace depuis la première zone géographique vers la seconde zone géographique, en vue d'une mise à jour des données d'état de l'application.

15. Procédé selon l'une des revendications 9 à 14 comprenant en outre la transmission des données de l'état de l'application à une pluralité de serveurs avant de déterminer lequel de la pluralité de serveurs deviendra le deuxième serveur.
